Europäisches Patentamt

European Patent Office                    (11) Publication number: **0 147 195**

Office européen des brevets                                    **B1**

(12)                    **EUROPEAN PATENT SPECIFICATION**

(45) Date of publication of patent specification: **05.09.90**    (51) Int. Cl.⁵: **G 02 F 1/31**

(21) Application number: **84308977.2**

(22) Date of filing: **20.12.84**

(54) Optical switch.

(30) Priority: **23.12.83 JP 242049/83**

(43) Date of publication of application:
**03.07.85 Bulletin 85/27**

(45) Publication of the grant of the patent:
**05.09.90 Bulletin 90/36**

(84) Designated Contracting States:
**DE FR GB NL**

(56) References cited:
**FR-A-2 321 138        US-A-3 970 364
US-A-3 790 853        US-A-4 130 342
US-A-3 837 728**

**APPLIED OPTICS, vol. 17, no. 24, December
1978, pages 3975-3978, New York, US; H.
NAITOH et al.: "Mirror-type optical switch array"
IBM TECNICAL DISCLOSURE BULLETIN, vol. 14,
no. 12 May 1972, page 3786, New York, US; L.
ESAKI et al.: "Electrically driven thin-film
structure for modulating or refracting infrared
radiation"**

(73) Proprietor: **HITACHI, LTD.**
6, Kanda Surugadai 4-chome
Chiyoda-ku, Tokyo 100 (JP)

(72) Inventor: **Hiroyoshi, Matsumura**
264-61, Kubo Hidaka-machi
Iruma-gun Saitama-ken (JP)
Inventor: **Chinone, Naoki**
1-47-3, Akatsuki-cho
Hachioji-shi Tokyo (JP)
Inventor: **Ishida, Koji**
3-17-15-703, Naka-machi
Musashino-shi Tokyo (JP)

(74) Representative: **Calderbank, Thomas Roger**
et al
**MEWBURN ELLIS & CO. 2/3 Cursitor Street
London EC4A 1BQ (GB)**

## Description

The present invention relates to an optical switch.

Optical switches are used, for example, to change the propagation of light from a path in one or more waveguides to a path or paths in other waveguides. Thus individual optical signals within optical fibres forming part of an optical communication system may be guided to other optical fibres of the system.

Optical switches which have been proposed have used optical deflection based on the acoustooptic effect of an optical transmission medium, optical deflection based on the electrooptic effect of a medium, changes in the coupling coefficient of a directional coupler by virtue of an electrooptical effect, or a directional coupler and an optical phase modulator in combination. None of these optical switches has, however, completely satisfied all the desired characteristics for an optical waveguide switch, such as low loss, low crosstalk and high speed. Optical switches using a direction coupler also have the further disadvantages that a high-precision machining technique of 1—2 μm is required, that the length of the optical switch is great and that a long distance is necessary in order to separate the coupling optical waveguides, whilst optical switches making use of optical deflection have the disadvantages that electrodes of complicated structure are required and that a wide separation angle cannot be achieved. These have led to the essential drawback that, when the number of matrices of the optical switch increases, the length of the element is greater than several centimetres, causing an increase in transmission loss.

As the present invention has been developed from a deflection type optical switch, the problems of such a switch will now be described in detail. The deflection type optical switch is also called a total reflection type optical switch, and a switch of this type is described in, e.g. the Official Gazette of Japanese Patent Laid-Open No. 54-7951. A similar disclosure is found in an article by H. Naitoh et al in Applied Optics. Vol. 17, No. 24, pp. 3975—3978 (1970), on which the pre-characterising part of claim 1 is based.

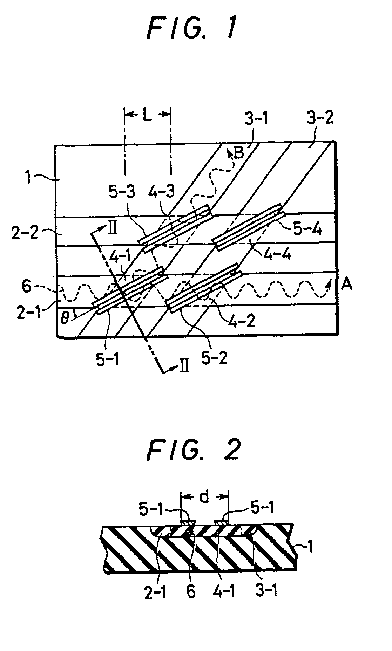

Fig. 1 of the accompanying drawings is a plan view showing a deflection type optical switch, while Fig. 2 of the accompanying drawings is a sectional view taken along the line II—II in Fig. 1. In Figs. 1 and 2, a crystalline substrate 1 of e.g. lithium niobate (LiNbO₃), which has an electro-optic effect, has optical waveguides 2-1, 2-2, 3-1, 3-2 formed in its surface by diffusing a metal such as Ti from the surface of the substrate 1. The optical waveguides are arranged in two pairs with the waveguides of each pair being parallel to each other, and the two pairs inclined to each other so that they intersect at regions 4-1, 4-2, 4-3, and 4-4. Pairs of electrodes 5-1, 5-2, 5-3 and 5-4 are formed on the surface of corresponding intersection regions in positions on either side of the longer diagonal lines of the rhomboidal intersection regions 4-1, 4-2, 4-3, 4-4. Although not illustrated, each electrode is connected to an input terminal by a lead line, so that a predetermined volage can be applied selectively across each pair of electrodes. Thus, the electrodes are field applying electrodes which apply an electric field to the corresponding intersection regions of the optical wave guides.

Assume now that light 6 is propagating through the optical waveguide 2-1 in the direction of arrow A in Fig. 1, and that the light is to be switched by the intersection region 4-1 to the direction of arrow B so as to propagate through the optical waveguide 3-1. To achieve this a voltage is applied across the field applying electrodes 5-1, to lower the refractive index in that part of the intersection portion 4-1 of the optical waveguides which is between the electrodes 5-1. Letter d in Fig. 2 indicates the width of the part hereinafter termed "total reflection part" in which the refractive index lowers to reflect totally the light propagating within the waveguide when the predetermined voltage is applied across the electrodes 5-1. The light 6 is reflected by the part of lower refractive index, and the propagating direction thereof is switched to the direction of the arrow B.

In this case, the polarity of the pair of electrodes 5-1 and the voltage to be applied across those electrodes 5-1 differ depending upon e.g. the nature of the crystalline substrate 1, and the direction of its crystallographic axis, and therefore these properties need to be selected correctly. The angle θ defined between the field applying electrode 5-1 and the optical waveguide 2-1 needs to be set so that the incident light may be totally reflected.

When LiNbO₃ is used as the substrate crystal 1 and when the optical waveguides are formed by diffusing Ti sufficiently, as described above the refractive index of the optical waveguide and that of the intersection regions is about 2.220 for light having a wavelength of 6328 Å. The electrooptical coefficient γ of the substrate 1 is of the order of $30\times10^{-12}$ m/V, and the refractive index change Δn of the intersection portion 4-1 due to the electrooptic effect is expressed by:

$$\Delta n=\tfrac{1}{2}n^3\gamma E$$

where E denotes the electric field intensity. In this case, therefore, Δn=0.0005 at an electric field intensity E of 5 V/μm. The refractive index of the intersection region 4-1 to which the electric field is applied is changed to about 2.2195, and the total reflection angle is 88.784 degrees. Therefore, the optical switch may be constructed so that the angle θ defined between the optical waveguide 2-1 and the field applying electrodes 5-1 is 1.216 degrees or less. More specifically, when the angle is 1.1 degrees, the separation angle (2θ) is 2.2 degrees, and the optical waveguides 2-1 and 3-1 should intersect at 2.2 degrees or less. When the electric field intensity to be applied is raised, the angle θ increases. However, even when a field intensity E as high as 50 V/μm is applied, the separation angle (2θ) is only 7.7 degrees.

An optical fibre usually has a diameter of about 125 µm. In order to couple the optical fibre and the optical switch, the interval between the optical waveguides 2-1 and 2-2 and the interval between the optical waveguides 3-1 and 3-2 taken at the middle positions of the optical waveguides must be at least 125 µm. When the separation angle (2θ) is 2.2 degrees, the length (L) the optical switch needs to be at least 3.3 mm, so that optical integration becomes difficult if the number of the optical switch is to be increased. Therefore, the total reflection type of optical switch has the disadvantage that the length of the entire optical switch is very large. In addition, the optical switch has a high operating voltage. This is due to the small electrooptical coefficient of $LiNbO_3$.

To overcome this disadvantage, consideration has been given to the use of a single crystal of a material of large electrooptical effect, for example, SBN (Sr-Ba-Ni-O). Such a crystal, however, might cause a scattering centre in the optical waveguide due to optical damage ascribable to the synergetic action of an electric field and light and is very unstable.

Known optical switches are also disclosed in the Official Gazette of Japanese Patent Laid-Open No. 54-7951, the Official Gazette of Japanese Laid-Open No. 54-33748, and the Official Gazette of Japanese Patent Laid-Open No. 56-66818.

The present invention seeks to overcome, or at least ameliorate, the problem of excessive size in a deflection type optical switch.

It does this by providing an optical switch having a substrate, at least two optical waveguides on the substrate, the optical waveguides being low loss, band-shaped layers intersecting each other in the same plane at a predetermined angle such that they define an intersection region at their intersection(s), and means for switching the path of light from one to the other of the waveguides;

characterised in that the switching means comprises:

at least one stripe layer interrupting the optical waveguides by extending along the longer diagonal of the or each intersection region, the band gap of the material of the or each stripe layer being equal or close to the wavelength of the light that the optical switch is to switch so that the refractive index depends on the carrier concentration, the width of the stripe layer being small enough to keep the transmission loss low; and

electrodes for changing the carrier concentration of the stripe layer so that the reflection of the light at the stripe layer is changed;

the substrate, the optical waveguides, and the or each stripe layer each being a compound semiconductor and all being from the same compound system.

By changing the carrier concentration of the stripe layer, its refractive index may be changed so that the light propagating in one waveguide may be deflected to another waveguide.

The present invention permits the manufacture of a small optical switch, which is low in dispersion, which has a high degree of separation, and which is capable of high integration. It also permits the manufacture of an array of optical switches.

Embodiments of the invention will now be described in detail, by way of example, with reference to the accompanying drawings, in which:

Fig. 1 is a plan view showing a known total reflection type optical switch and has already been described;

Fig. 2 is a sectional view taken along the line II—II in Fig. 1;

Figs. 3 and 4 are diagrams showing the spectrum of a refractive index change and the spectrum of an absorption coefficient in a GaAs buried hetero semiconductor laser respectively;

Figs. 5 and 6 are diagrams showing the spectrum of a refractive index and the spectrum of an absorption coefficient in a laser in which a GaAs-AlGaAs superlattice structure is employed as an active layer respectively, and

Figs. 7a to 7g are views illustrating the manufacturing process of one embodiment of an optical switch according to the present invention.

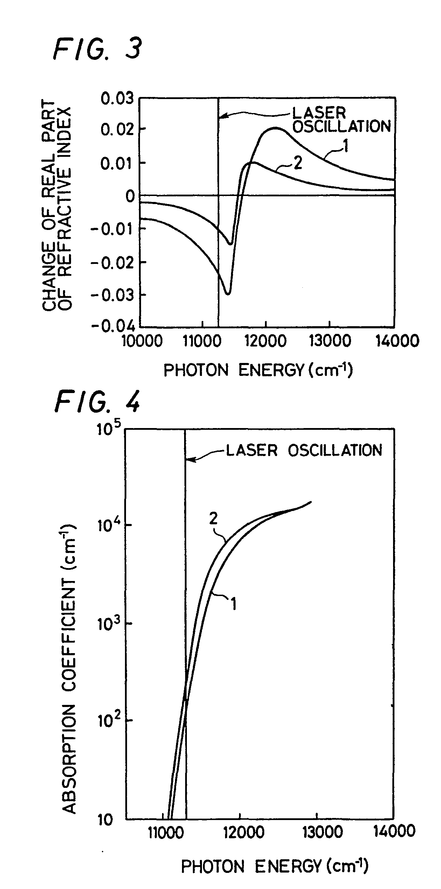

Before describing specific embodiments of the present invention, the theory believed to underlie the present invention will first be described with reference to Figs. 3 to 6.

In order to change the refractive index of a medium, it is usual to use the electrooptic effect. It is also possible to change the refractive index by changing the carrier concentration of a group III—group V compound semiconductor such as GaAs system or an InP system or a group II—group VI compound semiconductor. When carriers are injected into the compound semiconductor, the band gap of the material changes, and consequently the absorption coefficient of the material changes. Also, since the absorption coefficient is related to the imaginary part of the complex refractive index, a change of the absorption coefficient results in a change in the imaginary part of the refractive index. The refractive index $n$ and the dielectric constant $\varepsilon$ are related to the equation: $N=\sqrt{\varepsilon\mu}$ (where $\mu$ denotes the permeability of the substance). The real part and imaginary part of the dielectric constant expressed by a complex number are related by Kramers-Kronig's relations, so that the change of the imaginary part of the dielectric constant inevitably changes the real part. Therefore, when the imaginary part of the refractive index is changed by a change in the absorption coefficient due to a change of the carrier concentration as described above, the real part of the refractive index is also changed.

In order to indicate examples of numerical values, Fig. 3 shows the spectrum of the change of the real part of the refractive index in a buried hetero semiconductor laser having a GaAs active layer. As seen from the Figure, a great change occurs in the refractive index at a photon energy slightly larger than the laser oscillation value. The two curves 1 and 2 in Fig. 3 indicate the two cases of the concentrations of carriers injected when currents are applied to the semiconductor laser, being $1 \times 10^{18}$ cm$^{-3}$ and $0.5 \times 10^{18}$ cm$^{-3}$ respectively. As is clear from Fig. 3, when the concentration of the injected carriers is not less than $1 \times 10^{18}$ cm$^{-3}$, which corresponds to the carrier concentration due to laser oscillation, the magnitude of change of the refractive index may be as large as at least ±0.03 in absolute value in the vicinity of the photon energy of the laser oscillation. With a change in the real part of the refractive index of 0.03, the separation angle (2θ) between two intersecting optical waveguides surprisingly increases to 15.2 degrees in the application to the total reflection part of the total reflection type optical switch as shown in Fig. 1. This separation angle is increased by raising the injected carrier concentration. The separation angle (2θ) is further increased to 21.6 degrees by effectively utilizing the plus side and minus side of the index difference (namely, by utilizing the index difference of 0.06) such that, for example, an active layer is made of a plurality of materials having different absorption edges so as to bring the wavelength of the plus peak position of the refractive index change into agreement with the wavelength of the minus peak position.

However, the absorption loss in this region is high. Fig. 4 shows the spectrum of the absorption coefficient. Curves 1 and 2 correspond respectively to injected carrier concentrations of $1.0 \times 10^{18}$ cm$^{-3}$ and $0.5 \times 10^{18}$ cm$^{-3}$. In the vicinity of the laser oscillation value, the absorption coefficient is about $2 \times 10^2$ cm$^{-1}$. This corresponds to 869 dB/cm in terms of transmission loss. In order to suppress the transmission loss of light to less than 0.5 dB/cm, by way of example, the transmission length of this region, which is substantially the width of the total reflection part, needs to be made less than about 5 µm if the materials described above are used. In the optical switch as shown in Fig. 1, it is desirable to reduce the transmission loss of light as much as possible. Therefore, when the width of the total reflection part, for example, the total reflection part under the pair of electrodes 5-1 in the intersection portion 4-1 of the optical waveguides in Fig. 1 (the width $d$ being indicated in Fig. 2) is set at approximately 5 µm, an optical switch of large separation angle (2θ) and low loss may be constructed as is evident from the explanation above. From consideration of the separation angle, the length of the optical switch portion was 3.3 mm in the preceding case of LiNbO$_3$, whereas it may be 0.47 mm or less when the separation angle is 15.2 degrees as described above.

Moreover, when the change in the refractive index is large, as in the optical switch of the present invention, there is the further advantage that the optical switch may be used, not only as a single-mode switch, but also as a multi-mode switch.

In the optical switch of the present invention, in order to reflect light totally, the total reflection part needs to have a width greater than approximately the wavelength of light which is used. In addition, the optical waveguide other than the total reflection part needs to be of low loss, and it needs to be contructed of a GaAs high resitivity layer having a carrier concentration of e.g. the order of $10^{14}$ cm$^{-3}$.

It is desirable that the thickness of the total reflection part in the direction perpendicular to the substrate surface is greater than the thickness of the optical waveguide, in order to propagate light through the optical waveguide in a desired direction without leakage.

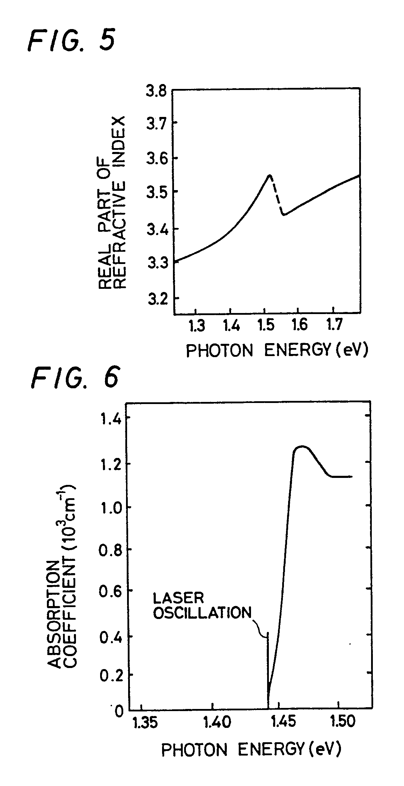

The band gap of the compound semiconductor layer which forms the total reflection part is set near an energy value which corresponds to the wavelength of light to be propagated. When the band gap is derived from Figs. 3 and 5, a magnitude somewhat smaller than the energy value of the propagation light seems to be more advantageous owing to a greater change in the refractive index of the propagation light. In this case, however, it is thought that the absorption of light may increase, causing transmission loss. Accordingly, it is more desirable that the photon energy of a position which is near the peak position of a change in the spectrum of the refractive index of the compound semiconductor layer so that the desired change in refractive index may be achieved by the injection of carriers, and which is somewhat smaller than the band gap, agrees with the photon energy of the light being propagated. In practice, therefore, it is desirable to select a compound semiconductor layer having a band gap such that the absorption coefficient at the wavelength of the light being propagated is preferably $10^3$ cm$^{-1}$ or less, more preferably $2 \times 10^2$ cm$^{-1}$ or less.

The compound semiconductor layer which forms the total reflection part needs to be capable of changing the carrier concentration by at least an amount necessary for switching light, but there are several ways of achieving this. Usually a P—N junction is provided, and a voltage is applied to the junction with the P part as an active layer, so that a forward current flows and carriers are injected into the stripe layer of the active layer, which is the total reflection part. The number of carriers injected can be changed by changing the current, in other words, the applied voltage. It is a technique well known in the field of semiconductor lasers than a P—N junction is provided in a compound semiconductor layer and that carriers are injected by the flow of a forward current. Alternatively a Schottky barrier, for example, can be used to change the carrier concentration.

Optical waveguides having a predetermined width and thickness and a refractive index higher than the surroundings are formed on a substrate. Usually, one waveguide or a plurality of waveguides parallel to each other intersect(s) one different or more other parallel waveguides at a separation angle 2θ. It is usual in the present invention that the substrate, the waveguide and the total reflection part are made of compound semiconductor layers of the identical system.

Electrodes for causing current to flow through the total reflection part are provided. Usually, since layers forming the P—N junction are provided substantially in parallel with the substrate, the forward current is in a direction substantially perpendicular to the substrate, and therefore, one of the electrodes is on that part of the upper surface of the substrate which corresponds to the total reflection part. The other electrode, which may be connected to the substrate, is preferably located on the entire lower surface of the substrate. In the optical switch of the present invention, however, the carrier concentration of the compound semiconductor forming the total reflection part may be changed by suitable means, and the electrodes need not be restricted to those discussed above.

The total reflection part is formed so that the optical waveguides intersecting each other are cut off by the stripe at the position of the longer diagonal line of the rhomboidal intersection region of the optical waveguides.

In general, a GaAs system, an InP system or an InGaAsP system may be employed as the material of which the optical switch of the present invention is made. It is also possible to employ a group III—group V compound semiconductor such as a GaSb system or a GaAlAsSb system or a group II—group VI compound semiconductor such as a CdS system, a CdSe system, a ZnS system or a ZnSe system.

The above explanation refers to the case where the total reflection part is formed of a GaAs active layer. However, the phenomenon is greater when the total reflection part is formed of a superlattice laminated of, for example a GaAs layer and an AlGaAs layer.

Fig. 5 shows as an example the photon energy spectrum of a refractive index in a superlattice which is laminated on an AlGaAs barrier layer 9.3 nm thick and a GaAs well layer 8.3 nm thick. As is seen from Fig. 5, a sharp dispersion curve having a width of 0.2 eV is exhibited near a photon energy of 1.5 eV. This corresponds to a width of 0.06 μm for light having a wavelength near 0.83 μm. When more carriers are injected into this superlattice, the dispersion curve tends to flatten, and a change of the refractive index occurs as in the semiconductor laser shown in Fig. 3. With a superlattice structure, the dispersion is about 30 times greater than that of a single GaAs layer, and hence, the change of the refractive index is greater by at least one order, i.e. approximately ±0.3. Then the separation angle ($2\theta$) of two intersecting optical waveguides becomes about 45 degrees, and the optical switch length (L) may be as small as 200 μm or less, so that optical integration at a higher density is permitted.

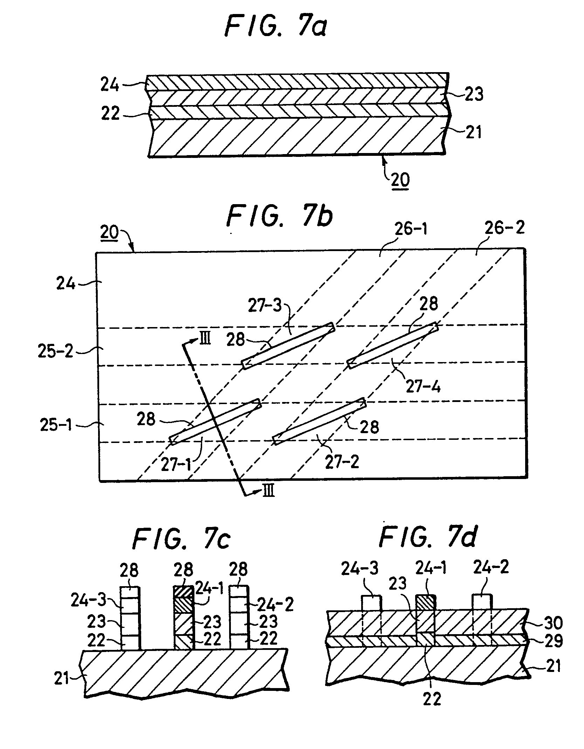

Furthermore, the absorption coefficient of a superlattice structure decreases suddenly at a laser oscillation value as illustrated in Fig. 6. This corresponds to an optical transmission loss of about 400 dB/cm, which is half or less of the loss of a single GaAs layer. This gives the advantage that the width of the total reflection part may be as large as e.g. about 10 μm.

As explained above, the semiconductor medium which gives rise to the change in refractive index due to carrier injection is used for the region which causes total reflection, whereby an optical switch of small size and high performance may be constructed.

One other merit of an optical switch according to the present invention is that, since the optical switch is similar in arrangement to a semiconductor laser, it may be used as an external transformer when combined in a single unit with the semiconductor laser. Also most of the prior-art optical switches operate only as single-mode switches, whereas the switch of the present invention may also function as a multi-mode switch. For example, if a superlattice structure is used, the optical switch may also function as a multi-mode switch when the separation angle ($2\theta$) of the optical waveguides is not set at 45 degrees but is set at about 20 degrees. A multi-mode switch may also be constructed when the superlattice structure is not used.

In the above explanation, the total reflection type optical switch has been referred to. However, with a construction wherein electrodes are arranged in the intersection portion of the optical waveguides at a certain optimum interval so as to utilize Bragg diffraction, the Bragg diffraction rather than total reflection may be attained, and the separation angle of the optical waveguides increases.

As set forth above, the optical switch of the present invention typically comprises i) a substrate of a compound semiconductor, ii) at least two optical waveguides intersecting each other at a predetermined angle, the optical waveguides being made of long and narrow layers of a compound semiconductor of the same system as that of the substrate, which layers are formed on the substrate and each of which has a width and a thickness as predetermined and a refractive index higher than the surroundings, and iii) at least one stripe layer which is made of a layer of a compound semiconductor of the same systems as that of the substrate and which has a width and a thickness as predetermined, the stripe layer being formed so as to cut off both the optical waveguides at the longer diagonal line of the rhomboid intersection portion of the optical waveguides, the band gap of the stripe layer being close to a wavelength of light used, so that when current is applied to the stripe layer to change its refractive index, the light propagating within one of the optical waveguides is reflected or diffracted in the stripe layer so as to switch its path of propagation to the other optical waveguide.

Now, embodiments of the present invention will be described in detail with reference to Figs. 7a to 7g.

Embodiment 1

Fig. 7a shows a sectional view of a laminated substrate in which a superlattice layer, a clad layer and a metal layer for an electrode are stacked on a substrate.

An Sn-doped InP substrate whose surface is a (100) plane was used as the substrate 21. Layers 22 of superlattice structure, in which an InGaAsP layer 8 nm thick and an InP layer 7 nm thick successively and alternately stacked, were grown on the substrate 21 to a thickness of 1.5 μm by molecular beam epitaxy (MBE process). The superlattice layers 22 were made of a composition having a band gap corresponding to light of a wavelength of 1.25 μm. Subsequently, an InP clad layer 23 about 2 μm thick was formed on the superlattice layer 22 by liquid phase epitaxy (LPE process), and an electrode metal layer 24 made of, for example, a Cr/Au stacked layer was formed thereon to a thickness of about 0.3 μm. Thus, a laminated substrate 20 was fabricated.

In the prior-art arrangement shown in Fig. 1, the electrodes 5-1 to 5-4 exist as pairs in the intersection portions 4-1 to 4-4 between the optical waveguides 2-1, 2-2 and 3-1, 3-2. In contrast, in the present embodiment, as seen from the plan view shown in Fig. 7b, one stripe electrode on one side extends along each of the longer diagonal lines of the rhomboidal intersection regions 27-1 to 27-4 between optical waveguides 25-1, 25-2 and 26-1, 26-2 enclosed within the dotted lines. The other electrode (made of, for example, a Cr/Au stacked layer similar to the electrode metal layer 24 mentioned above) is a common electrode 31 having a thickness of about 0.3 μm on the whole rear surface of the laminated substrate 20.

In order to obtain such structure, a Cr/Au stacked layer about 0.3 μm thick was first formed on the whole rear surface of the laminated substrate. Thereafter, each photoresist pattern 28 identical in shape to the electrode pattern was formed on that position of the metal layer 24 which corresponds to the stripe electrode to be formed.

Next, as shown in Fig. 7c, using the photoresist pattern 28 as a mask, unnecessary parts around the mask were removed by photoetching until the InP substrate 21 was reached, thereby to form each of the stripe electrodes 24-1 to 24-4 having a length of 30 μm and a width of 4 μm under the photoresist pattern 28 and simultaneously to leave the striped InP layer 23 and superlattice layer 22 under the electrode.

In the next step, shown in Fig. 7d, an InGaAsP layer 29 1 μm thick was grown by the LPE process on the InP substrate 21 exposed around the electrodes 24-1 to 24-4, and an InP layer 30 2.5 μm thick was grown thereon. In this case, the carrier concentrations of the InGaAsP layer 29 and the InP layer 30 were of the order of $10^5$ cm$^{-3}$, and the transmission loss of light was not greater than 2 dB/cm. Figs. 7c and 7d are sectional views showing section III—III in Fig. 7b.

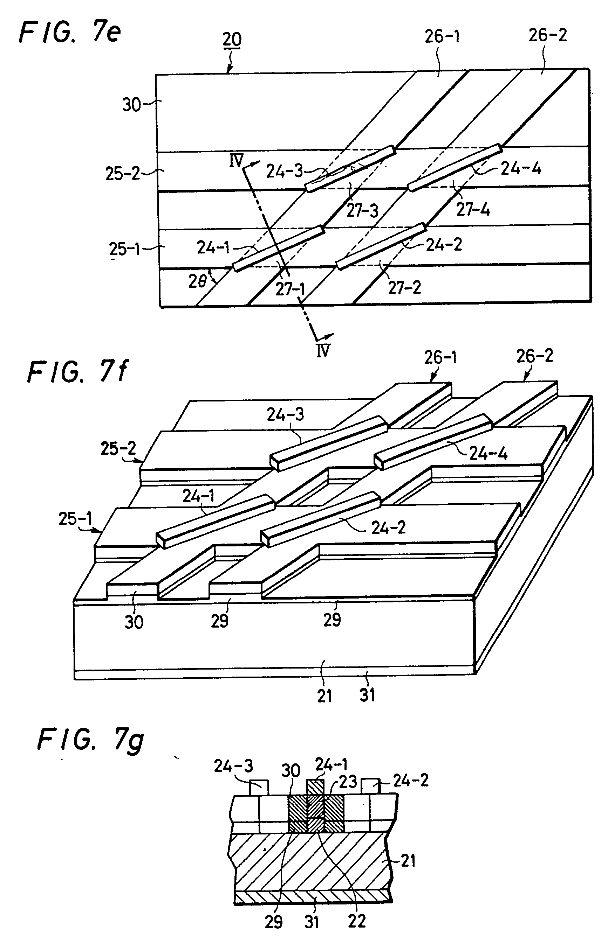

Thereafter, as shown in a plan view of Fig. 7e and a perspective view of Fig. 7f, the optical waveguides 25-1 to 26-2 around the stripe electrodes 24-1 to 24-4, previously indicated as being enclosed with the dotted lines in Fig. 7b, were formed into a ridge type having a width of 5 μm and a height of 3 μm by removing the InP layer 30 and the InGasAsP layer 29 by ion milling so that the remaining InGaAsP layer 29 had a thickness of 0.5 μm. Thus an optical switch according to the present invention was fabricated. The separation angle (2θ) of the optical waveguides was set at 15 degrees, and the interval between the optical waveguides was set at 125 μm.

The refractive indices of the InGaAsP layer 29 and the InP layer 30 were 3.30 and 3.21, respectively. Fig. 7g is a sectional view showing section IV—IV in Fig. 7e. Although not illustrated, the respective electrodes are connected to input terminals by lead lines, and a voltage of predetermined value can be applied across the selected stripe electrode and the electrode 31 on the rear surface.

A semiconductor laser beam of a wavelength of 1.3 μm was applied to the optical switch fabricated as described above. The optical switch was 1.6 mm long and has two sets of waveguides, each set consisting of four parallel waveguides. It has been found that the optical waveguides are not single-mode waveguides but that they are multi-mode ones. The extinction ratio of the optical switch when a forward current flows to the superlattice layer by about 23 mA was less than −30 dB, and the transmission loss was less than 2 dB. The switching time was about 0.8 nsec, enough to ensure a high speed, and the forward applied voltage necessary for operation was about 0.9 V, which is a convenient value. The total reflection part was about 4 μm wide in the present embodiment by way of example. Such an optical switch can readily be produced with the present-day technology for manufacturing a semiconductor device.

Embodiment 2

An optical switch was produced similar to Embodiment 1 except that the superlattice layer 22 was replaced with a single InGaAsP layer of a composition with a band gap corresponing to light with a wavelength of 1.25 μm so that the separation angle was 5 degrees. The optical switch was 2.0 mm long, and had multi-mode waveguides for a laser beam with a wavelength of 1.3 μm. The extinction ratio at a forward current of 23 mA was −25 dB, the transmission loss was below 5 dB, the switching time was 0.9 nsec, and the applied voltage was 1 V. All these values are satisfactory. Moreover, the optical switch was easy to produce, similar to that of Embodiment 1.

As described above, according to the present invention, refractive index can be significantly changed merely by applying current, and hence, an optical switch array capable of high integration which has a simple arrangement and which is applicable to multi-mode switching of light can be provided, so that significant practical advantages may be achieved.

## Claims

1. An optical switch having a substrate (21), at least two optical waveguides (25-1, 25-2, 26-1, 26-2) on the substrate, the optical waveguides (25-1, 25-2, 26-1, 26-2) being low loss, band-shaped layers intersecting each other in the same plane at a predetermined angle such that they define an intersection region (27-1, 27-2, 27-3, 27-4) at their intersection(s), and means for switching the path of the light from one to the other of the waveguides,

characterised in that the switching means comprises:

at least one stripe layer (22, 23) interrupting the optical waveguides by extending along the longer diagonal of the or each intersection region (27-1, 27-2, 27-3, 27-4), the band gap of the material of the or each stripe layer (22, 23) being equal or close to the wavelength of the light that the optical switch is to switch so that the refractive index depends on the carrier concentration, the width of the stripe layer being small enough to keep the transmission loss low; and

electrodes (24-1, 24-2, 24-3, 24-3, 31) for changing the carrier concentration of the stripe layer, so that the reflection of the light at the stripe layer is changed;

the substrate (21), the optical waveguides (25-1, 25-2, 25-3, 25-4), and the or each stripe layer (22, 23) each being a compound semiconductor and all being from the same compound system.

2. An optical switch according to claim 1, wherein one of the electrodes has the same pattern as the stripe layer and is located directly or indirectly on the stripe layer.

3. An optical switch according to claim 2, wherein another electrode is located on the surface of the substrate opposite to that on which are the optical waveguides.

4. An optical switch according to any one of claims 1 to 3, wherein the or each stripe layer is an active layer of a P—N junction.

5. An optical switch according to any one of claims 1 to 4, wherein the compound semiconductor system is a group III—group V compound semiconductor system or a group II—group VI compound semiconductor system.

6. An optical switch according to any one of the preceding claims, wherein the compound semiconductor system is a GaAs system, an InP system, an InGaAsP system, a GaSb system, a GaAlAsSb system, a CdS system, a CdSe system, a ZnS system or a ZnSe system.

7. An optical switch according to any one of the preceding claims having at least two optical waveguides which are parallel to each other and which have a predetermined interval therebetween, at least one other optical waveguide intersecting those two parallel waveguides.

8. An optical switch according to any one of the preceding claims, wherein the stripe layer has a width greater than the predetermined wavelength of light to be propagated.

9. An optical switch according to any one of the preceding claims, wherein the stripe layer has a thickness in the direction perpendicular to the substrate surface that is greater than the thickness of the optical waveguides.

10. An optical switch according to any one of the preceding claims, wherein the compound semiconductor of which the at least one stripe layer is made has a band gap with an absorption coefficient for the predetermined wavelength of light to be propagated of $10^3$ cm$^{-1}$ or less.

11. An optical switch according to claim 4, wherein the P—N junction is in parallel with the substrate.

12. An optical switch according to any one of the preceding claims, wherein the at least one stripe layer is made of a superlattice.

13. An optical switch according to claim 12, wherein the superlattice is a lamination of GaAs and AlGaAs layers.

14. An optical switch according to claim 12, wherein the superlattice is a lamination of InP and InGaAsP layers.

## Patentansprüche

1. Optischer Schalter mit einem Substrat (21), wenigstens zwei Lichtwellenleitern (25-1, 25-2, 26-1, 26-2) auf dem Substrat, wobei die Lichtwellenleiter (25-1, 25-2, 26-1, 26-2) verlustarme, bandförmige Schichten sind, die sich in einem vorbestimmten Winkel in der gleichen Ebene schneiden, so daß sie an ihrer (ihren) Durchschneidung(en) einen Durchschneidungsbereich (27-1, 27-2, 27-3, 27-4) bestimmen, sowie einer Einrichtung zum Umschalten des Lichtpfads von einem zu dem anderen Wellenleiter,

dadurch gekennzeichnet, daß die Schalteinrichtung aufweist:

wenigstens eine Streifenschicht (22, 23), die die Lichtwellenleiter dadurch unterbricht, daß sie entlang der längeren Diagonale des oder jedes Durchschneidungsbereichs (27-1, 27-2, 27-3, 27-4) verläuft, wobei die Bandlücke des Materials der oder jeder Streifenschicht (22, 23) gleich oder nahezu gleich der Wellenlänge des Lichts ist, das der optische Schalter schalten soll, so daß die Brechungszahl von der Trägerkonzentration abhängt, wobei die Breite der Streifenschicht gering genug ist, um den Übertragungsverlust gering zu halten, und

Elektroden (24-1, 24-2, 24-3, 24-4, 31) zur Veränderung der Trägerkonzentration auf der Streifenschicht, so daß die Reflexion des Lichts an der Streifenschicht verändert wird,

wobei das Substrat (21), die Lichtwellenleiter (25-1, 25-2, 25-3, 25-4) und die oder jede Streifenschicht (22, 23) jeweils ein Verbindungshalbleiter sind und wobei alle aus dem gleichen Verbindungssystem stammen.

2. Optischer Schalter nach Anspruch 1, bei welchem eine der Elektroden das gleiche Muster wie die Streifenschicht aufweist und sich direkt oder indirekt auf der Streifenschicht befindet.

3. Optischer Schalter nach Anspruch 2, bei welchem eine andere Elektrode sich auf der Fläche des Substrats befindet, die gegenüber derjenigen liegt, auf der sich die Lichtwellenleiter befinden.

4. Optischer Schalter nach einem der Ansprüche 1 bis 3, bei welchem die oder jede Streifenschicht eine aktive Schicht eines pn-Übergangs ist.

5. Optischer Schalter nach einem der Ansprüche 1 bis 4, bei welchem das Verbindungshalbleiter-System ein Gruppe III/Gruppe V-Verbindungshalbleiter-System oder ein Gruppe II/Gruppe VI-Verbindungshalbleiter-System ist.

6. Optischer Schalter nach einem der vorhergehenden Ansprüche, bei welchem das Verbindungshalbleiter-System ein GaAs-System, ein InP-System, ein InGaAsP-System, ein GaSb-System, ein GaAlAsSb-System, ein CdS-System, ein CdSe-System, ein ZnS-System oder ein ZnSe-System ist.

7. Optischer Schalter nach einem der vorhergehenden Ansprüche mit wenigstens zwei Lichtwellenleitern, die parallel zueinander liegen und einen vorbestimmten Abstand voneinander aufweisen, wobei wenigstens ein weiterer Lichtwellenleiter jene zwei parallelen Lichtwellenleiter schneidet.

8. Optischer Schalter nach einem der vorhergehenden Ansprüche, bei welchem die Streifenschicht eine Breite aufweist, die größer ist als die vorbestimmte Wellenlänge des fortzupflanzenden Lichts.

9. Optischer Schalter nach einem der vorhergehenden Ansprüche, bei welchem die Streifenschicht in der Richtung, die senkrecht zu der Substratfläche liegt, eine Dicke aufweist, die größer ist als die Dicke der Lichtwellenleiter.

10. Optischer Schalter nach einem der vorgehenden Ansprüche, bei welchem der Verbindungshalbleiter, aus dem wenigstens die eine Streifenschicht besteht, eine Bandlücke mit einem Absorptionskoeffizienten für die vorbestimmte Wellenlänge des fortzupflanzenden Lichts von $10^3$ cm$^{-1}$ oder weniger aufweist.

4. Optischer Schalter nach Anspruch 4, bei welchem der pn-Übergang parallel zu dem Substrat liegt.

12. Optischer Schalter nach einem der vorhergehenden Ansprüche, bei welchem wenigstens die eine Streifenschicht auf einem Übergitter besteht.

13. Optischer Schalter nach Anspruch 12, bei welchem das Übergitter ein Laminat aus GaAs- und AlGaAs-Schichten ist.

14. Optischer Schalter nach Anspruch 12, bei welchem das Übergitter ein Laminat aus InP- und InGaAsP-Schichten ist.

**Revendications**

1. Commutateur optique possédant un substrat (21), au moins deux guides d'ondes optiques (25-1, 25-2, 26-1, 26-2) sur le substrat, les guides d'ondes optiques (25-1, 25-2, 26-1, 26-2) étant des couches sous forme de bande, à faible perte, s'entrecoupant dans le même plan selon un angle prédéterminé de manière à délimiter une région d'intersection (27-1, 27-2, 27-3, 27-4) à leur(s) intersection(s), et des moyens pour commuter le trajet de la lumière de l'un à l'autre des guides d'ondes, caractérisé en ce que les moyens de commutation comportent:

au moins une couche en bande (22, 23) interrompant les guides d'ondes optiques en s'étendant le long de la ou de chaque région d'intersection diagonale la plus longue (27-1, 27-2, 27-3, 27-4), l'intervalle de bande du matériau de la ou de chaque couche en bande (22, 23) étant égal ou proche de la longueur d'onde de la lumière que le commutateur optique doit commuter de sorte que l'indice de réfraction dépend de la concentration en porteurs, la largeur de la couche en bande étant suffisamment faible pour maintenir faible la perte de transmission; et

des électrodes (24-1, 24-2, 24-3, 24-4, 31) pour modifier la concentration en porteurs de la couche en bande, de sorte que la réflexion de la lumière soit modifiée sur la couche en bande;

le substrat (21), les guides d'ondes optiques (25-1, 25-2, 25-3, 25-4) et la ou chaque couche en bande (22, 23) étant chacune un semiconducteur composite et toutes appartenant au même système composite.

2. Commutateur optique selon la revendication 1, dans lequel une des électrodes possède la même configuration que la couche en bande et est disposée directement ou indirectement sur la couche en bande.

3. Commutateur optique selon la revendication 2, dans lequel une autre électrode est disposée sur la surface du substrat opposée à celle sur laquelle se trouvent les guides d'ondes optiques.

4. Commutateur optique selon l'une quelconque des revendications 1 à 3, dans lequel la ou chaque couche en bande est une couche active d'une jonction P—N.

5. Commutateur optique selon l'une des revendications 1 à 4, dans lequel le système semiconducteur composite est un système semiconducteur composite groupe III-groupe V ou un système semiconducteur composite groupe II-groupe VI.

6. Commutateur optique selon l'une quelconque des revendications précédentes, dans lequel le système semiconducteur composite est un système GaAs, un système InP, un système InGaAsP, un système GaSb, un système GaAlAsSb, un système CdS, un système CdSe, un système ZnS ou un système ZnSe.

7. Commutateur optique selon l'une quelconque des revendications précédentes, possédant au moins deux guides d'ondes optiques qui sont parallèles entre eux et qui possèdent un intervalle prédéterminé entre eux, au moins un autre guide d'ondes optiques entrecoupant ces deux guides d'ondes parallèles.

8. Commutateur optique selon l'une quelconque des revendications précédentes, dans lequel la couche en bande possède une largeur supérieure à la longueur d'onde prédéterminée de la lumière à propager.

9. Commutateur optique selon l'une quelconque des revendications précédentes, dans lequel la couche en bande possède une épaisseur dans la direction perpendiculaire à la surface du substrat qui est supérieure à l'épaisseur des guides d'ondes optiques.

10. Commutateur optique selon l'une quelconque des revendications précédentes, dans lequel le semiconducteur composite dont au moins une couche en bande est constituée possède un intervalle de bande avec un coefficient d'absorption pour la longueur donde de lumière prédéterminée à propager de $10^3$ cm$^{-1}$ au moins.

11. Commutateur optique selon la revendication 4, dans lequel la jonction P—N est en parallèle avec le substrat.

12. Commutateur optique selon l'une quelconque des revendications précédentes, dans lequel la ou au moins une couche en bande est constituée d'un superréseau.

13. Commutateur optique selon la revendication 12, dans lequel le superréseau est un empilement de couches de GaAs et de AlGaAs.

14. Commutateur optique selon la revendication 12, dans lequel le superréseau est un empilement de couches de InP et de InGaAsP.

# FIG. 1

# FIG. 2

## FIG. 3

CHANGE OF REAL PART OF REFRACTIVE INDEX vs PHOTON ENERGY (cm⁻¹)

## FIG. 4

ABSORPTION COEFFICIENT (cm⁻¹) vs PHOTON ENERGY (cm⁻¹)

2

FIG. 5

FIG. 6

## FIG. 7a

## FIG. 7b

## FIG. 7c

## FIG. 7d

4

FIG. 7e

20    26-1    26-2

30

IV

25-2    24-3    24-4

27-3    27-4

25-1    24-1    24-2

2θ    27-1    27-2

IV

FIG. 7f

26-1    26-2

24-3

25-2    24-4

24-1

25-1    24-2

30    29    29

21    31

FIG. 7g

24-3    30    24-1    23    24-2

21

29    31    22